## Europäisches Patentamt

## European Patent Office

## Office européen des brevets

(11) Veröffentlichungsnummer: **0 127 038**
**A2**

(12) **EUROPÄISCHE PATENTANMELDUNG**

(21) Anmeldenummer: **84105391.1**

(22) Anmeldetag: **12.05.84**

(51) Int. Cl.³: **G 02 B 27/34**
**G 02 B 23/14**

(30) Priorität: **28.05.83 DE 3319392**

(43) Veröffentlichungstag der Anmeldung:
**05.12.84 Patentblatt 84/49**

(84) Benannte Vertragsstaaten:
**BE FR GB NL SE**

(71) Anmelder: **Fried. Krupp Gesellschaft mit beschränkter Haftung**
**Altendorfer Strasse 103**
**D-4300 Essen 1(DE)**

(72) Erfinder: **Duveneck, Uwe**
**Langeooger Strasse 15**
**D-2870 Delmenhorst(DE)**

(54) Optisches Visier.

㊐ Es wird ein optisches Visier, insbesondere für Rohrwaffen, mit darin als eingeblendeter Lichtpunkt einer Leuchtdiode sichtbarer Zielmarke zur Vorhalt- und/oder Aufsatzmarkierung angegeben, bei welchem zur Erzielung einer hohen Auflösung in der Anzeige von Vorhalt und/oder Aufsatz die Leuchtdioden einer Leuchtdiodenmatrix lichtmäßig an jeweils einem Lichtleiter angekoppelt sind, dessen Durchmesser zumindest an der endseitigen Lichtaustrittsstelle wesentlich kleiner als die Leuchtdiodenabmessungen ist. Die Lichtaustrittsstellen der Lichtleiter sind räumlich nebeneinander angeordnet und mit einer Einspiegelungsoptik zum gemeinsamen Einspiegeln in den Visierstrahlengang verbunden.

EP 0 127 038 A2

Croydon Printing Company Ltd.

- 1 -

FRIED. KRUPP GESELLSCHAFT MIT BESCHRÄNKTER HAFTUNG
in Essen

## Optisches Visier

Die Erfindung betrifft ein optisches Visier, insbesondere für Rohrwaffen, der im Oberbegriff des Anspruchs 1 genannten Art.

Ein solches Visier für die Zieleinrichtung einer Waffe ist mit einer Strichplatte ausgerüstet, auf welcher Strichmarken und ein Fadenkreuz angeordnet sind. Die Strichplatte ist derart angeordnet, daß Strichmarken und Fadenkreuz im Sichtfeld des Visiers erkennbar sind. Außerdem werden im Sichtfeld notwendige Werte für Vorhalt oder Aufsatz der Waffe - mitunter auch beides - angezeigt. Die Vorhalt- oder Aufsatzwerte werden durch eine Zielmarke angezeigt, um die Waffe auf die anderweitig ermittelten Azimut- oder Elevationswinkel einzustellen. Entsprechend der Größe des Vorhaltes oder des Aufsatzes weist die Zielmarke dabei eine entsprechende horizontale oder vertikale Ablage von der Visiermitte auf.

Bei einem bekannten optischen Visier ist zur Erzeugung der Zielmarke für die Vorhaltmarkierung eine Leuchtdiodenzeile hoher Auflösung vorgesehen, die in den Visierstrahlengang eingespiegelt wird. Nach Ermittlung des Vorhaltwertes wird eine Leuchtdiode, die einen dem Vorhaltwert entsprechenden Abstand von der Zeilenmitte aufweist, angesteuert, so daß ein entsprechender Lichtpunkt mit gleichem Abstand von der Visiermitte im Sichtfeld des Visiers aufleuchtet. Auf diesen Lichtpunkt ist das Ziel auszurichten.

Aufgrund der relativ großen Abmessungen der Leuchtdioden und aufgrund der vom Visier vorgegebenen Maximallänge der Leuchtdiodenzeile ist nur eine begrenzte Auflösung der Vorhalt- bzw. Aufsatzwerte möglich. Selbst bei dieser begrenzten Auflösung ist eine spezielle, miniaturisierte Leuchtdiodenzeile erforderlich, deren Herstellkosten nicht unbeträchtlich sind.

Der Erfindung liegt die Aufgabe zugrunde, ein Visier der eingangs genannten Art zu schaffen, bei welchem eine preiswerte und standfeste Zielmarken-Anzeige mit hoher Auflösung von Vorhalt- und/oder Aufsatz erreicht wird. Die Anzeige soll dabei unmittelbar von einem Rechner gesteuert werden können und ausreichende Helligkeit aufweisen, so daß das Visier mit Anzeige für Tag- und Nachtbetrieb geeignet ist.

Die Aufgabe ist bei einem optischen Visier der im Oberbegriff des Anspruchs 1 definierten Gattung durch die Merkmale im Kennzeichnungsteil des Anspruchs 1 gelöst.

Das erfindungsgemäße Visier hat den Vorteil, daß durch die Verwendung von Lichtleitern bei vorgegebenem Visierdurchmesser eine wesentlich größere Anzahl von nebeneinanderliegenden Leuchtpunkten, z. B. 200, komplett in den Visierstrahlengang eingespiegelt werden kann. Die Vorhalt- bzw. Aufsatz-

- 3 -

werte können dadurch mit einer wesentlich höheren Auslösung angezeigt werden, so daß die Zielgenauigkeit der Waffe erhöht wird. Die mögliche Anzahl der einblendbaren Leuchtpunkte ist lediglich vom Durchmesser der endseitigen Lichtaustrittsstellen der als Glasfasern ausgebildeten Lichtleiter abhängig, und nicht mehr von der Länge der einspiegelbaren Leuchtdiodenzeile. Dadurch kann auf handelsübliche und preiswerte LED-Bausteine mit beliebigen Abmessungen zurückgegriffen werden, wobei die einzelnen Leuchtdioden im Baustein auch matrixartig angeordnet sein können.

Eine vorteilhafte Ausführungsform der Erfindung ergibt sich aus Anspruch 5. Durch das Zwischenschalten von Sammellinsen zwischen den einzelnen Leuchtdioden und den einzelnen Lichteintrittsflächen der Glasfasern, die gegenüber den Abmessungen der Leuchtdioden wesentlich reduzierte Durchmesser aufweisen, wird die Lichtausbeute pro Glasfaser erheblich gesteigert, so daß die Helligkeit der Anzeige im Visier mit der bei der bekannten Leuchtdiodeneinspiegelung vergleichbar ist. Selbstverständlich ist es auch möglich - wenn auch fertigungstechnisch etwas problematischer - das den Leuchtdioden zugekehrte Ende der Glasfaser konisch auszubilden und so den Durchmesser der Glasfaser bis auf die Abmessungen der Leuchtdiode zunehmen zu lassen.

Die Erfindung ist anhand eines in der Zeichnung dargestellten Ausführungsbeispiels im folgenden näher beschrieben. Es zeigen:

Fig. 1 eine Zielmarken-Einspiegelungsvorrichtung eines Visiers für eine
Rohrwaffe, schematisch dargestellt,

Fig. 2 einen Querschnitt eines Ausschnitts A in Fig. 1 in vergrößerter Darstellung,

Fig. 3 eine schematische Darstellung eines
Sichtfeldes des Visiers in Fig. 1
mit eingeblendeter Strichplatte
und Zielmarke.

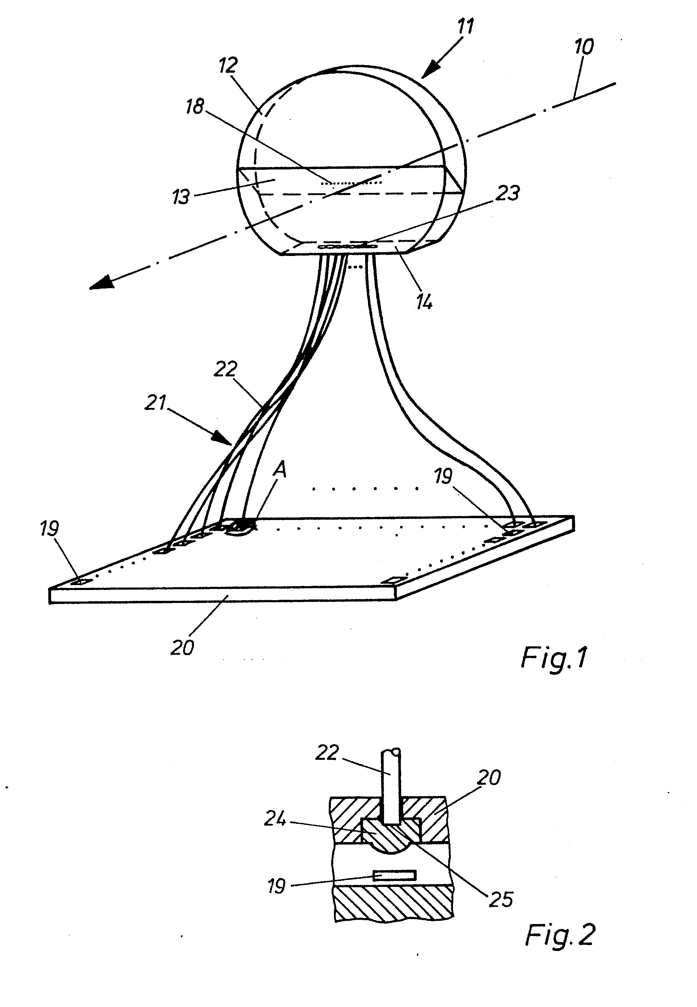

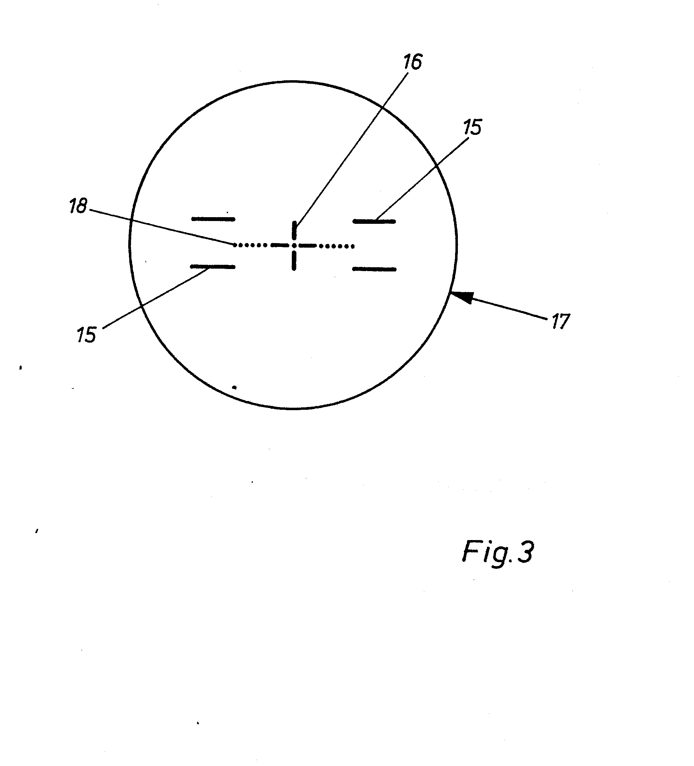

Ein optisches Visier oder Zielfernrohr für eine Rohrwaffe ist allgemein bekannt, so daß dieses in Fig. 1 nur ausschnittsweise in dem hier interessierenden Teil einer Zielmarken-Einspiegelungsvorrichtung dargestellt ist. Mit 10 ist dabei die optische Achse des Visiers schematisch angedeutet. Weiter ist eine sog. Einspiegelungsoptik 11 zu sehen, die eine konzentrisch zur optischen Achse 10 im Visierstrahlengang angeordnete lichtdurchlässige Platte 12 aufweist, die eine gegenüber der optischen Achse 10 um einen Winkel geneigte teildurchlässige Spiegelfläche 13 enthält. Die scheibenförmige Platte 12 weist am unteren Rand eine ebene Grenzfläche 14 auf. Nicht dargestellt ist eine Strichplatte, die konzentrisch zur optischen Achse 10 des Visiers vor der lichtdurchlässigen Platte 12 angeordnet ist und zwar in einem Abstand von der Mitte der lichtdurchlässigen Platte 12, der dem Abstand der Grenzfläche 14 von der optischen Achse 10 entspricht. Diese Strichplatte trägt Strichmarken 15 und ein Ziel- oder Fadenkreuz 16, die im Sichtfeld 17 des Visiers sichtbar sind (Fig. 3). Im Sichtfeld 17 des Visiers ist weiter eine Zielmarke 18 zur Vorhaltmarkierung sichtbar. Jede der in Fig. 3 dargestellten punktförmigen Zielmarken 18 ist einem bestimmten Vorhaltwert zugeordnet, der von einem Rechner aus ballistischen Größen ermittelt wird. Je größer der Vorhaltwert ist, desto größer ist der Abstand der zugeordneten Zielmarke 18 von der Visiermitte, also der optischen Achse 10. Nur jeweils diejenige punktförmige Zielmarke 18 ist im Sichtfeld 17 für den Bedienenden zu erkennen, die dem jeweils ermittelten Vorhaltwert entspricht. Für den Fall, daß die Zielmarken eine Aufsatzmarkierung darstellen sollen, sind die einzelnen Zielmarken 18 nicht in einer Horizontallinie, sondern in einer Vertikallinie anzuordnen.

Jede Zielmarke 18 wird durch Einblenden des Leuchtpunktes einer außerhalb des Visierstrahlengangs angeordneten Leuchtdiode 19 in den Visierstrahlengang erzeugt. Um eine möglichst hohe Auflösung des Vorhaltwertes zu erzielen, ist eine sehr große Anzahl, im Beispiel etwa 200, von Zielmarken erforderlich, die mit entsprechendem Abstand von Visiermitte im Sichtfeld 17 einzeln angezeigt werden müssen. Um dies zu erreichen, sind die Leuchtdioden 18 außerhalb des Visierstrahlengangs in einer handelsüblichen LED-Matrix 20 reihen- und spaltenweise angeordnet und werden einzeln entsprechend ihrem zugeordneten Vorhaltwert von einem Rechner angesteuert. An die Lichtabstrahlfläche einer jeden Leuchtdiode 19 ist ein Lichtleiter 21 lichtmäßig angekoppelt. Die Lichtleiter 21, die hier als Glas- oder Lichtleiterfasern 22 beliebiger Ausbildung, z. B. Gradienten- oder Mantelfasern, ausgebildet sind, sind zu der Einspiegelungsoptik 11 geführt und mit ihren Lichtaustrittsstellen 23, die von den stirnseitigen Lichtaustrittsflächen der Glasfasern 22 gebildet werden, auf der Grenzfläche 14 der Platte 12 befestigt. Die Glasfasern 22 sind im Durchmesser derart bemessen, daß zumindest die Durchmesser der Lichtaustrittsflächen 23 wesentlich kleiner als die Lichtabstrahlfläche der Leuchtdioden 19 sind. Die Lichtaustrittsflächen 23 sind dabei räumlich nebeneinander angeordnet und in einer Linie ausgerichtet. Die auf der Grenzfläche 14 aufliegenden Lichtaustrittsflächen 23 werden über die teildurchlässige Spiegelfläche 13 in den Strahlengang des Visiers eingespiegelt und sind im Sichtfeld 17 als Zielmarken 18 wahrnehmbar. Durch den sehr kleinen Durchmesser der Lichtaustrittsflächen 23 der Glasfasern 22 lassen sich unabhängig von den Abmessungen der Leuchtdioden 19 sehr viele Leuchtpunkte in einer Reihe nebeneinander anordnen, wodurch ein Vorhalt- oder Aufsatzwert mit hoher Auflösung im Visier dargestellt werden kann.

Zur Erhöhung der Lichtausbeute pro Glasfaser 22 ist - wie aus Fig. 2 ersichtlich - zwischen der Lichtabstrahlfläche einer jeden Leuchtdiode 19 der LED-Matrix 20 und der endseitigen Lichteintrittsfläche 25 der im Durchmesser konstanten Glasfaser 22 jeweils eine Sammellinse 24 angeordnet. Dadurch wird die gesamte an den Lichtabstrahlflächen der Leuchtdioden 19 zur Verfügung stehende Lichtstärke in den flächenmäßig sehr kleinen Lichtaustrittsflächen 23 der Glasfasern 22 konzentriert. Die Helligkeit der im Sichtfeld 17 des Visiers angezeigten Zielmarke 18 ist damit sehr hoch, so daß die Anzeige auch im Tagesbetrieb gut sichtbar ist.

-.-.-.-.-.-.-.-.-.-

ANSPRÜCHE
=========

1. Optisches Visier, insbesondere für Rohrwaffen, mit darin sichtbarer Zielmarke zur Vorhalt- und/oder Aufsatzmarkierung, die mittels Leuchtdioden erzeugt und in den Visierstrahlengang optisch eingeblendet ist, dadurch gekennzeichnet, daß an jeder Leuchtdiode (19) jeweils ein Lichtleiter (21) lichtmäßig angekoppelt ist, dessen Durchmesser zumindest an der endseitigen Lichtaustrittsstelle (23) wesentlich kleiner als die Leuchtdiodenabmessungen ist, und daß die Lichtaustrittsstellen (23) räumlich nebeneinander angeordnet und mit einer Einspiegelungsoptik (11) zum gemeinsamen Einspiegeln in den Visierstrahlengang verbunden sind.

2. Visier nach Anspruch 1, dadurch gekennzeichnet, daß die Lichtleiter (21) als Glasfasern (22) ausgebildet und die Lichtein- und Lichtaustrittsstellen (23, 24) der Lichtleiter (21) von den beiden endseitigen Stirnflächen der Glasfasern (22) gebildet sind.

3. Visier nach Anspruch 2, dadurch gekennzeichnet, daß die Glasfasern (22) an der Einspiegelungsoptik (11) selbst befestigt sind.

4. Visier nach einem der Ansprüche 1 bis 3, dadurch gekennzeichnet, daß die Einspiegelungsoptik (11) eine im Visierstrahlengang angeordnete lichtdurchlässige Platte (12) mit einer gegenüber der optischen Achse (10) geneigten teildurchlässigen Spiegelfläche (13) aufweist.

5. Visier nach einem der Ansprüche 2 bis 4, dadurch gekennzeichnet, daß zwischen den endseitigen Lichteintrittsflächen (25) der Glasfasern (22) und den Leuchtdioden (19) Sammellinsen (24) angeordnet sind.

6. Visier nach einem der Ansprüche 2 bis 5, dadurch gekennzeichnet, daß die Leuchtdioden (19) matrixartig reihen- und spaltenweise angeordnet und die der Einspiegelungsoptik (11) zugekehrten endseitigen Lichtaustrittsflächen (23) der Glasfasern (22) in einer Zeile nebeneinander aufgereiht sind.

-.-.-.-.-.-.-.-.-.-.-

- $\frac{1}{2}$ -

Fig.1

Fig.2

- 2/2 -

Fig.3